Europäisches Patentamt

**European Patent Office**

Office européen des brevets

(11) Veröffentlichungsnummer: **0 022 503**
**B1**

(12) # EUROPÄISCHE PATENTSCHRIFT

(45) Veröffentlichungstag der Patentschrift:
**14.04.82**

(51) Int. Cl.³: **B 01 J 47/14**, G 01 N 27/42

(21) Anmeldenummer: **80103678.1**

(22) Anmeldetag: **28.06.80**

(54) **Vorrichtung zur Anzeige der metallspezifischen Beladung von Ionenaustauschern.**

(30) Priorität: **12.07.79 DE 2928123**

(43) Veröffentlichungstag der Anmeldung:
**21.01.81 Patentblatt 81/3**

(45) Bekanntmachung des Hinweises auf die Patenterteilung:
**14.04.82 Patentblatt 82/15**

(84) Benannte Vertragsstaaten:
**AT CH FR IT LI NL SE**

(56) Entgegenhaltungen:
**DE-A- 2 602 232**
**FR-A- 2 325 927**

**ANALYTICAL CHEMISTRY, Band 30, Nr. 11, November 1958, Columbus, Ohio, US, R.L. REBERTUS et al.: "Continuous polarographic analysis of Ion exchange effluents", Seiten 1825–1827**

(73) Patentinhaber: **DORNIER SYSTEM GmbH, Postfach 1360, D-7990 Friedrichshafen (DE)**

(72) Erfinder: **Inacker, Otto, Dr.Dipl.-Chem., Seestrasse Ost 20, D-7759 Immenstaad (DE)**
Erfinder: **Sessler, Berthold, Dipl.-Ing., Maillinger Strasse 13, D-8700 Würzburg (DE)**

(74) Vertreter: **Landsmann, Ralf, Dipl.-Ing., Kleeweg 3, D-7990 Friedrichshafen 2 (DE)**

Vorrichtung zur Anzeige der metallspezifischen Beladung von Ionenaustauschern

Die Erfindung betrifft eine Vorrichtung zur Anzeige der metallspezifischen oder metallgruppenspezifischen Beladung von Ionenaustauschern.

Zur Beladungsanzeige bei Ionenaustauschern werden neben physikalischen Messverfahren (pH-Messung, elektrische Leitfähigkeit), die jedoch bestenfalls den Durchbruch der Ionen am Auslauf anzeigen können, Indikatorharze verwendet, die ebenfalls auf die pH-Änderung des Harzes reagieren und jeweils die vollständige Abgabe der H$^+$-Ionen bei Kationenaustauschern oder OH$^-$-Ionen bei Anionenaustauschern anzeigen.

Diese Anzeigen sind unspezifisch und ermöglichen keine Aussage über die Ionenart, gegen die die H$^+$/OH$^-$-Ionen ausgetauscht worden sind.

Aus der DE-A-26 02 232 ist eine Einrichtung zur Wiedergewinnung von in Spülwässern von Galvanisieranlagen befindlichen Metallen mit mindestens zwei hintereinander geschalteten transportablen Ionenaustauscher-Behältern und einem vorgeschalteten Filter bekannt, wobei die von unten nach oben durchströmten, oben und unten mit einem Sieb abgedeckten, an den Rändern mit umlaufenden Dichtungen versehenen Ionenaustauscher-Behälter vertikal übereinander angeordnet sind.

Für den Betrieb von Ionenaustauschern dieser Art ist es erforderlich, den Durchbruch spezieller Ionen an den einzelnen Behältern festzustellen, um Aufschluss über den Beladungszustand des Harzes zu bekommen. Die bisher verwendeten Anzeige-Methoden versagen für die spezifische Anzeige von Metallen bei gleichzeitiger Anwesenheit weiterer gleichgeladener Komponenten in der Flüssigkeit, sie sind zu teuer oder sie sind durch Probenentnahme und Analyse nur sehr umständlich durchzuführen.

Der Erfindung liegt die Aufgabe zugrunde, eine Vorrichtung zur Anzeige der spezifischen Beladung von Ionenaustauschern zu schaffen.

Diese Aufgabe wird erfindungsgemäss dadurch gelöst, dass sich im Flüssigkeitsstrom hinter einem oder mehreren Ionenaustauscher-Behältern zwei gegenpolige Elektroden befinden, auf deren einer Oberfläche nicht vom Ionenaustauscher-Behälter zurückgehaltene Metalle einen Niederschlag bilden.

Ein Teilstrom des Ablaufs von einem Ionenaustauscher-Behälter wird an zwei Elektroden, die anstelle der bisherigen Anzeigenmethode durch Probenentnahme und Analyse oder durch Indikatorharze sichtbar hinter einem Fenster des Austauscherbehälters angeordnet sind, vorbeigeführt. Durch eine an den Elektroden anliegende Gleichspannung wird das nachzuweisende Metall abgeschieden, sobald es von den Ionenaustauschern nicht mehr zurückgehalten wird. Damit einhergehend ändert sich der zwischen Kathode und Anode fliessende Strom und durch Auswahl des Kathodenmaterials ist an der Kathode eine Farbänderung erkennbar. Die Selektivität für bestimmte Metalle ist sowohl durch die an den Elektroden anliegende Spannung als auch durch das Kathodenmaterial und deren Kombination gegeben.

Die Beladungsanzeige erlaubt zunächst eine Unterscheidung zwischen Alkali- und Erdalkalimetallen einerseits und Bunt- und Edelmetallen andererseits. Die erste Gruppe von Metallen wird prinzipiell in wässriger Lösung elektrolytisch nicht abgeschieden und damit nicht angezeigt. Die zweite Gruppe kann aus wässriger Lösung als Metall abgeschieden werden, abhängig von der angelegten Spannung.

Die zur Abscheidung eines Metalls nötige Spannung kann aus den Normalpotentialen und der Metallionenkonzentration berechnet werden. Allgemein gilt, je edler ein Metall ist, umso geringer ist die zu seiner Abscheidung nötige Spannung. So kann durch Wahl der angelegten Spannung immer das edelste Metall abgeschieden und metallspezifisch angezeigt werden.

Ebenso kann die Abscheidespannung so gewählt werden, dass mehrere Metalle gleichzeitig abgeschieden und damit eine Metallgruppe, z.B. Gold und Silber oder Gold, Silber und Kupfer, zur Anzeige gebracht werden können.

Darüberhinaus kann die Farbe der Abscheidung zur metallspezifischen Anzeige verwandt werden. Da der Farbumschlag aber durch Art, Anzahl und Konzentration aller nebeneinander vorliegenden Ionen, das Elektrodenmaterial und die Abscheidespannung beeinflusst wird, können sich im allgemeinen komplexe Verhältnisse ergeben. In der Praxis handelt es sich um Abwässer definierter Prozesse, so dass sich die Verhältnisse sehr vereinfachen und die Farbe zur metallspezifischen Anzeige herangezogen werden kann. Die Parameter und Bedingungen sind experimentell ermittelbar.

Weiterhin kann die während der Abscheidung gemessene Stromspannungskurve zur metallspezifischen Anzeige ausgewertet werden.

Weitere Ausgestaltungen der Erfindung sind zum Gegenstand von Unteransprüchen gemacht worden.

Weitere Vorteile, Merkmale und Anwendungsmöglichkeiten ergeben sich aus der nachfolgenden Beschreibung eines Ausführungsbeispiels.

Es zeigen:

Fig. 1 eine prinzipielle Darstellung für die Notwendigkeit der Beladungsanzeige von Ionenaustauscher-Behältern,

Fig. 2 eine prinzipielle Darstellung der erfindungsgemässen Vorrichtung, und

Fig. 3 ein Diagramm für verschiedene Abscheidespannungen, an dem die metallgruppenspezifische Abscheidung erläutert wird.

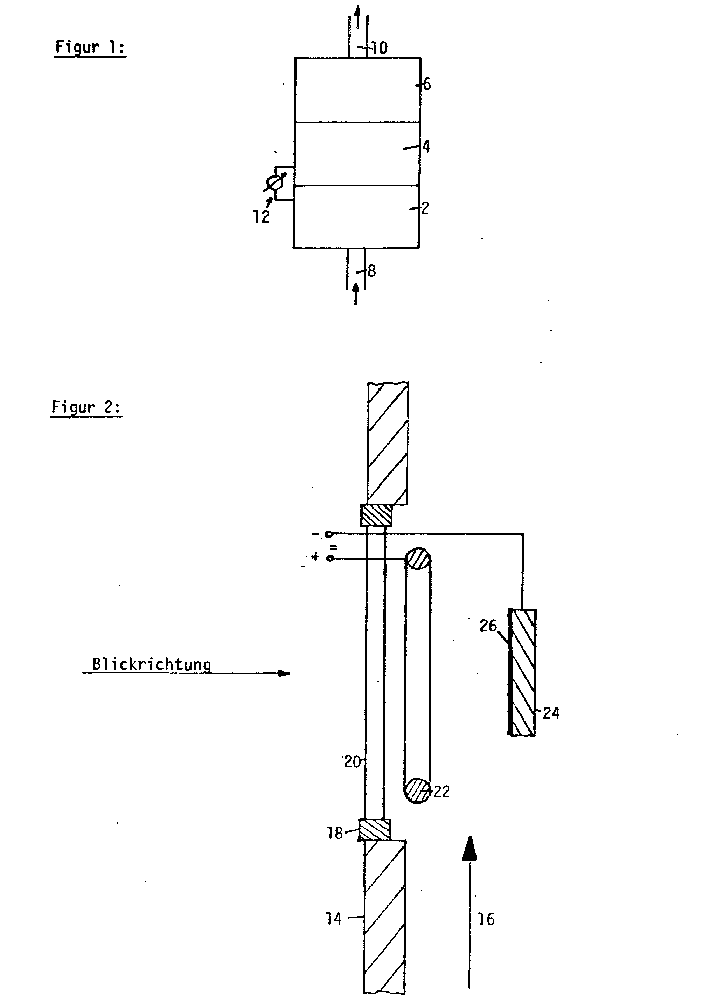

Fig. 1 zeigt eine Einrichtung, bei der mehrere Ionenaustauscher-Behälter 2, 4, 6 übereinander angeordnet sind, die von unten nach oben durchströmt werden, wobei in der Prinzipskizze ein Zulauf 8 und ein Ablauf 10 zu sehen sind. Der untere lonenaustauscherbehälter 2 soll dann ausgetauscht werden, wenn er voll beladen ist. Mit dem Austauschen gelangt lonenaustauscherbehälter 4 an seine Stelle, während lonenaustauscherbehälter 6 den ursprünglichen Platz von lonenaustauscherbehälter 4 einnimmt und ein neuer lonenaustauscherbehälter (nicht gezeigt) an die Stelle von lonenaustauscherbehälter 6 gelangt. Zur Bestimmung des richtigen Zeitpunkts für den Austausch der lonenaustauscherbehälter ist es deshalb erforderlich, dass zwischen den Behältern 2 und 4 eine Anzeige 12 vorgesehen ist, die den Beladungszustand des lonenaustauscherbehälters 2 anzeigt.

Hierzu wird nun erfindungsgemäss die Vorrichtung verwendet, die in Fig. 2 beschrieben ist. Fig. 2 zeigt ein Rohrstück 14, das in Pfeilrichtung von einer Flüssigkeit 16 durchströmt wird. In der Rohrwand ist mittels einer Dichtung 18 ein Sichtfenster 20 angeordnet. Hinter dem Sichtfenster 20 befindet sich in Blickrichtung eine Ringanode 22 und eine scheibenförmige Kathode 24, wobei diese beiden Elektroden über eine im Prinzip dargestellte Gleichstromquelle mit unterschiedlichem Potential versorgt werden. Enthält die Flüssigkeit 16 nun ein Metall, so wird sich dieses auf der Oberfläche 26 der Kathode 24 niederschlagen und durch geeignete Wahl des Kathodenmaterials wird eine Verfärbung der Oberfläche 26 für den Betrachter sichtbar. Als Kathodenmaterial und Anodenmaterial eignet sich beispielsweise Kupfer zur spezifischen Anzeige von Gold oder Silber.

In Versuchen wurde aus einer Verdünnung von 1 zu $10^5$ aus einem Goldbad eine deutlich sichtbare Goldschicht auf einer Kupferkathode abgeschieden.

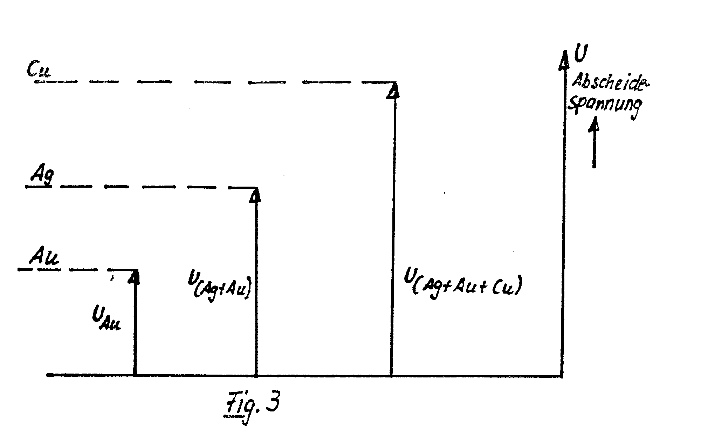

Fig. 3 zeigt ein Diagramm für die Wahl der Abscheidespannung U im Hinblick auf die Metalle Gold, Silber und Kupfer. Wird die Abscheidespannung gering gewählt, wie dies für $U_{Au}$ gezeigt ist, so wird nur Gold zur Anzeige gebracht. Wählt man die Spannung grösser ($U_{Ag+Au}$), so werden Gold und Silber zur Anzeige gebracht. Die Abscheidespannung $U_{(Au+Ag+Cu)}$ bringt Gold, Silber und Kupfer zur Anzeige.

Ferner kann durch Messung des Stroms und der Spannung festgestellt werden, ob und welches Metall sich auf der Kathode abgeschieden hat. Auch die Auswertung dieses Ergebnisses dient der Feststellung der Beladung des lonenaustauschers.

## Patentansprüche

1. Vorrichtung zur Anzeige der metallspezifischen oder metallgruppenspezifischen Beladung von lonenaustauschern, die mit einem oder mehreren in der elektrolytischen Spannungsreihe nebeneinanderliegenden Metallen beladen werden, dadurch gekennzeichnet, dass sich im Flüssigkeitsstrom hinter einem oder mehreren lonenaustauscher-Behältern (2, 4, 6) zwei gegenpolige Elektroden (22, 24) befinden, auf deren einer Oberfläche (26) nicht vom lonenaustauscher-Behälter zurückgehaltene Metalle einen Niederschlag bilden und die Abscheidespannung so gewählt ist, dass ein oder mehrere Metalle gleichzeitig abgeschieden werden und einen Niederschlag auf der Oberfläche der Elektrode bilden.

2. Vorrichtung nach Anspruch 1, dadurch gekennzeichnet, dass zumindest eine der Elektroden (22, 24) in einem Schauglas (20) sichtbar ist.

3. Vorrichtung nach Ansprüchen 1 bis 2, dadurch gekennzeichnet, dass eine Änderung der Stärke des elektrischen Stroms zwischen den Elektroden mit Beginn des sich aufbauenden Niederschlags optisch anzeigbar ist.

4. Vorrichtung nach Ansprüchen 1 bis 3, dadurch gekennzeichnet, dass eine Elektrode (22) eine Ringanode ist und die Kathode (24) eine Scheibe bildet, wobei sich die Kathode vorzugsweise im Bereich der Symmetrieachse der Ringanode befindet.

5. Vorrichtung nach Ansprüchen 1 bis 4, dadurch gekennzeichnet, dass durch Wahl der angelegten Spannung verschiedene Metallgruppen angezeigt werden.

6. Vorrichtung nach Ansprüchen 1 bis 5, dadurch gekennzeichnet, dass bei geeigneter Wahl des Kathodenmaterials ein Farbumschlag sichtbar gemacht wird.

## Claims

1. Device for indicating the loading of ion exchangers with respect to a particular metal or a plurality of metals, the ion exchangers are loaden with one metal or a plurality of metals, which are juxtaposed in the series of elements (according to their electrochemical potentials) comprising two reciprocal poled electrodes (22, 24) which are positioned in a stream of liquid behind one or more ion-exchanger-containers (2, 4, 6) whereby on the surface of one of the electrodes a deposit is formed by the metal not retained in the ion-exchanger and the voltage applied to the electrodes is adjustable, to deposit one or more metals simultaneously on the surface of the electrode.

2. Device according to claim 1 in which at least one of the electrodes (22, 24) is visible through an inspection glass (20).

3. Device according to any of the claims 1 and 2 in which a variation of the amperage between the electrodes can be indicated optically with the beginning of the growing electrodeposition.

4. Device according to any of the claims 1 to 3 in which one electrode (22) is an annular anode and the cathode (24) is a disk, whereby preferably the cathode is placed within the range of the axis of symmetry of the annular anode.

5. Device according to any of the claims 1 to 4 in which by selection of the applied voltage various groups of metals are indicated.

6. Device according to any of the claims 1 to 5 in which by proper selection of the material of the cathode a color change is made visible.

## Revendications

1. Dispositif indicateur du chargement spécifique en métaux ou en groupes de métaux des échangeurs d'ions qui sont chargés avec un ou plusieurs métaux juxtaposés dans la série des tensions électrolytiques, caractérisé en ce que dans le courant de liquide sont montées, en aval d'un ou de plusieurs réservoirs d'échange d'ions (2, 4, 6) deux électrodes (22, 24) de polarités opposées sur l'une des surfaces (26) desquelles les métaux qui n'ont pas été retenus par le réservoir d'échange d'ions forment un dépôt et en ce que la tension de séparation est choisie de façon qu'un ou plusieurs métaux se séparent simultanément et forment un dépôt sur la surface de l'électrode.

2. Dispositif selon la revendication 1, caractérisé en ce que l'une, au moins, des électrodes (22, 24) est visible à travers une fenêtre (20).

3. Dispositif selon la revendication 1 ou 2, caractérisé en ce qu'une variation de l'intensité du courant électrique circulant entre les électrodes au commencement de la formation du dépôt est indiquée par voie optique.

4. Dispositif selon l'une quelconque des revendications 1 à 3, caractérisé en ce que l'une des électrodes est une anode annulaire (22), tandis que l'autre est constituée par une cathode en forme de disque (24), cette cathode étant, de préférence, disposée dans la région de l'axe de symétrie de l'anode annulaire.

5. Dispositif selon l'une quelconque des revendications 1 à 4, caractérisé en ce que, par un choix judicieux de la tension appliquée, la présence de différents groupes de métaux est indiquée.

6. Dispositif selon l'une quelconque des revendications 1 à 5, caractérisé en ce que, par un choix judicieux du matériau constituant la cathode, il se forme un dépôt coloré visible sur celle-ci.

**Figur 1:**

**Figur 2:**

Blickrichtung

Cu

Ag

Au

$U_{Au}$

$U_{(Ag+Au)}$

$U_{(Ag+Au+Cu)}$

U

Abscheidespannung

Fig. 3